# EUROPEAN PATENT APPLICATION

(11) **EP 1 975 936 A2**
(43) Date of publication of application: **01.10.2008**
(21) Application number: 07024634.3
(22) Date of filing: 19.12.2007
(51) Int. Cl.: G11B 20/18

(54) **Disk recorder management apparatus and disk recorder management method**

(30) Priority: 30.03.2007 JP 2007090377
(71) Applicant: Kabushiki Kaisha Toshiba, Minato-ku, Tokyo 105-8001 (JP)
(72) Inventor: Mori, Takahisa, Minato-ku Tokyo 105-8001 (JP)
(74) Representative: HOFFMANN EITLE

(57) **Abstract**

According to one embodiment, a disk recorder management apparatus (11) includes: a connection part (40) to which a disk recorder (41) is connected; an initial connection judging unit (61) judging whether or not the disk recorder is connected to the connection part for the first time; and a recording control unit (61) making the disk recorder record registration information indicating a correspondence between the disk recorder management apparatus (11) and the disk recorder when it is judged by the initial connection judging unit that the disk recorder is connected for the first time.

## Description

### BACKGROUND

### 1. Field

One embodiment of the invention relates to a disk recorder management apparatus performing management of a disk recorder which records data to a disk such as a hard disk or a DVD, and to a disk recorder management method.

### 2. Description of the Related Art

Conventionally, various types of broadcast receiving apparatuses and video recording apparatuses are in practical use. As such broadcast receiving apparatuses and video recording apparatuses, there are widely used apparatuses compatible with a digital broadcast, such as an apparatus which receives a broadcast wave of the digital broadcast in addition to that of a conventional analog broadcast to display video of a program or to record video data by using a retrieved video signal from the received broadcast wave.

A digital broadcast receiving apparatus, which receives the digital broadcast, is also able to record or reproduce video data by connecting a data recording apparatus capable of recording a large amount of data, such as a disk recorder (for example, a hard disk apparatus) which records data to a disk such as a hard disk or a DVD.

With respect to a conventional digital broadcast receiving apparatus, the following apparatus is disklosed in Japanese Patent Application Publication (KOKAI) No. 2006-92711 (Patent Document 1). The apparatus indicates a change of identification information at a time of recording or reproducing after the identification information of a recording apparatus connected to the digital broadcast receiving apparatus is changed.

### SUMMARY OF THE INVENTION

As stated above, a disk recorder is connected to a conventional broadcast receiving apparatus, and video data may be recorded or reproduced by the disk recorder. As for a video recording apparatus, a disk recorder may be connected in order to increase a memory capacity.

However, the disk recorder is not only used as a data recording apparatus capable of recording large amount of video data but also used as an auxiliary storage apparatus by being connected to a data processing apparatus such as a personal computer.

Thus, the disk recorder having been connected to the data processing apparatus such as the personal computer may be later connected to a broadcast receiving apparatus or a video recording apparatus.
Besides, when the disk recorder is connected to the broadcast receiving apparatus or the video recording apparatus and recording is performed by using that disk recorder, it is necessary to initialize a disk used by the disk recorder to reformat the disk to be suitable for recording or reproducing the video data.

However, when a user uses a plurality of disk recorders, it may not be known whether the individual disk recorder is used as the data recording apparatus or the auxiliary storage apparatus. Therefore, there is a possibility that necessary data is deleted by mistake at a time of initialization of the dies recorder.
As stated above, conventionally, apparatuses performing displaying or recording of video such as a broadcast receiving apparatus and a video recording apparatus are not sufficient in terms of a function for a case that a disk recorder is connected, and a convenience in such a case is not sufficient.

The invention is made to solve the above problem and is objected to provide a disk recorder management apparatus and a disk recorder management method which enhance the convenience at a time that the disk recorder is connected in an apparatus performing displaying or recording of video such as a broadcast receiving apparatus or a video recording apparatus.
In order to solve the above problem, the invention is characterized by a disk recorder management apparatus which includes a connection part to which a disk recorder is connected; an initial connection judging unit judging whether or not the disk recorder is connected to the connection part for the first time; and a recording control unit making the disk recorder record registration information indicating a correspondence between the disk recorder management apparatus and the disk recorder when it is judged by the initial connection judging unit that the disk recorder is connected for the first time.

The invention also provides a disk recorder management method in a disk recorder management apparatus with a connection part to which a disk recorder is connected, the disk recorder management method including making the disk recorder record registration information indicating a correspondence between the disk recorder management apparatus and the disk recorder when the disk recorder is connected to the connection part for the first time.
As described in detail above, according to the invention, there can be obtained a disk recorder management apparatus and a disk recorder management method which enhance a convenience at a time that a disk recorder is connected in an apparatus performing displaying or recording of video such as a broadcast receiving apparatus or a video recording apparatus.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is a block diagram showing a configuration of a hard disk management system according to an embodiment of the invention;
FIG. 2 is a block diagram showing a configuration of a network system;

FIG. 3 is a block diagram showing a main configuration of the inside of a digital broadcast receiving apparatus;
FIG. 4 is a flowchart showing an operating procedure of hard disk management;
FIG. 5 is a flowchart showing an operating procedure of bad block management;
FIG. 6 is a view showing an example of a screen displaying an initial registration message;

FIG. 7 is a view showing an example of a screen displaying a disk inspection message; and
FIG. 8 is a diagram showing an example of a bad block table.

### DETAILED DESCRIPTION

Various embodiments according to the invention will be described hereinafter with reference to the accompanying drawings.

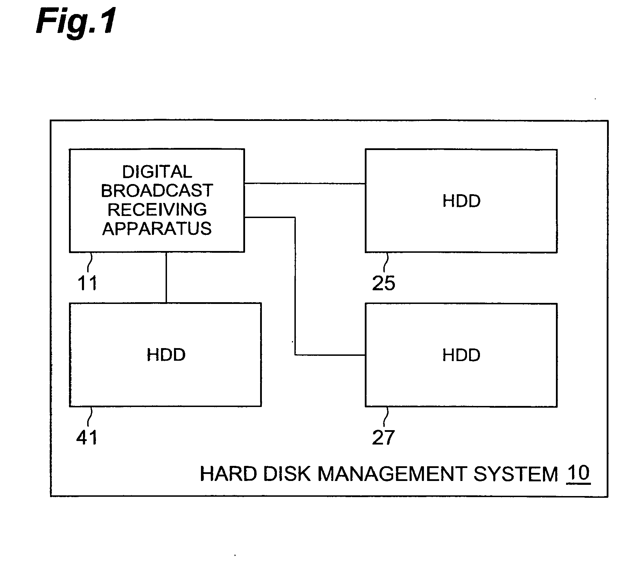

FIG. 1 is a bock diagram showing a configuration of a hard disk management system 10 according to an embodiment of the invention. The hard disk management system 10 includes a digital broadcast receiving apparatus 11, a hard disk apparatus (HDD: Hard Disk Drive) 25, a hard disk apparatus 27, and a hard disk apparatus 41.

The digital broadcast receiving apparatus 11 has a function as a disk recorder management apparatus, and makes the HDD 25, the HDD 27, and the HDD 41 record later-described registration information and so on to manage the HDD 25, the HDD 27, and the HDD 41. In the following description, there is described an example of a case that the HDDs are connected to the digital broadcast receiving apparatus 11 as disk recorders.

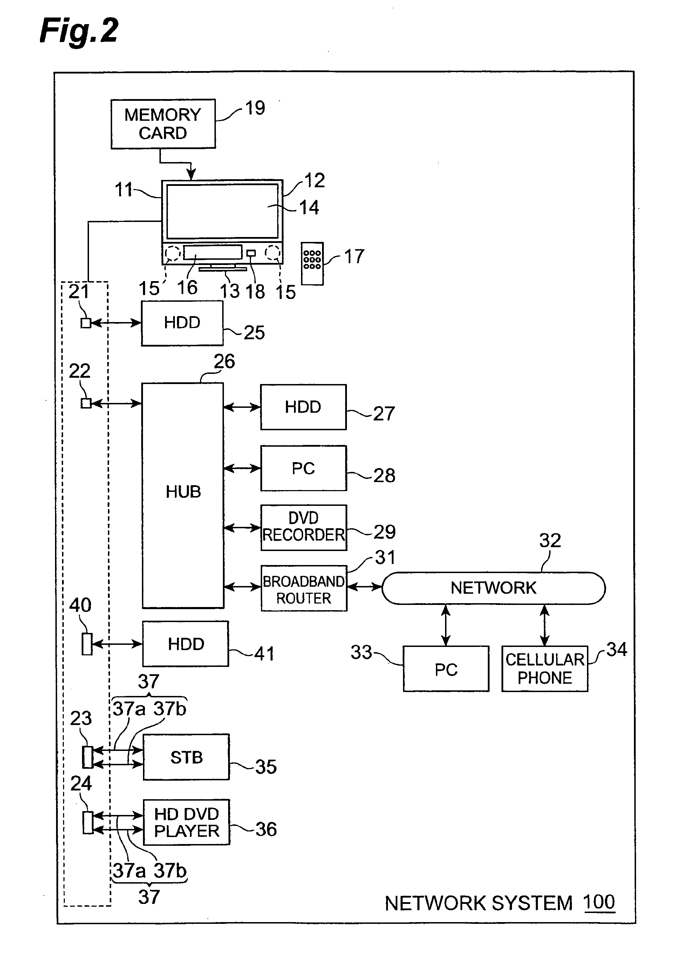

Next, FIG. 2 is a block diagram showing a configuration of the digital broadcast receiving apparatus 11 and a network system 100 configured centering on the digital broadcast receiving apparatus 11.

The digital broadcast receiving apparatus 11 includes a cabinet 12 and a support table 13 supporting the cabinet 12 with the cabinet 12 raised, as shown in FIG. 2. The cabinet 12 includes a flat panel type liquid crystal display apparatus 14 having a liquid crystal display panel, a speaker 15 as a sound output device outputting sound, and an operation part 16, and also includes a light receiving part 18 receiving operation information transmitted from a remote controller 17.

The digital broadcast receiving apparatus 11 is a video display apparatus displaying video by the liquid crystal display apparatus 14 as a display device displaying video, and displays video by using a video signal inputted from the STB 35 or the HD DVD player 36.

A memory card 19 such as an SD (Secure Digital) memory card or a USB memory, for example, is attachable and detachable to and from the digital broadcast receiving apparatus 11, and recording and reproducing of a program, a photograph and the like are performed by using the memory card 19.

The digital broadcast receiving apparatus 11 includes a first LAN (Local Area Network) terminal 21, a second LAN (Local Area Network) terminal 22, a first HDMI (High-Definition Multimedia Interface) terminal 23, a second HDMI (High-Definition Multimedia Interface) terminal 24, and a USB terminal 40.

These terminals are selected in correspondence with apparatus switching, and the external apparatus connected to the selected terminal is set to be the external apparatus for video display. For example, when the first HDMI terminal 23 is selected by the apparatus switching, the STB 35 is set to be the external apparatus for video display.

The first LAN terminal 21 is used as a LAN compatible HDD exclusive port. This first LAN terminal 21 is used for recording and reproducing information by Ethernet (registered trademark) to and from a LAN compatible HDD 25 connected to the first LAN terminal 21 as a NAS (Network Attached Storage).

As stated above, in the network system 100, by providing the first LAN terminal 21 as the LAN compatible HDD exclusive port, information recording of a program to the HDD 25 in high definition quality can be stably performed without being influenced by the other network environment, a network usage status and the like.

The second LAN terminal 22 is used as a general LAN compatible port using Ethernet. Equipment such as a LAN compatible HDD 27, a PC (Personal Computer) 28 and a DVD (Digital Versatile Disk) recorder 29 with a built-in HDD are connected to this second LAN terminal 22 through a hub 26, for example, and the second LAN terminal 22 is used for performing information transmission to and from such equipment.

Further, a PC 33 and a cellular phone 34 are connected to the second LAN terminal 22 through a broadband router 31 connected to the hub 26, and a network 32 such as the Internet, and the second LAN terminal 22 is also used for performing information transmission to and from the PC 33 and the cellular phone 34.

The first and second HDMI terminals 23, 24 are terminals for inputting high definition digital video signal and digital sound signal from the external apparatus in accordance with an HDMI standard. The STB 35 is connected as the external apparatus to the first HDMI terminal 23, while the HD DVD player 36 is connected to the second HDMI terminal 24.

The digital video signals and the digital sound signals are inputted and outputted between the first and second HDMI terminals 23, 24 and the external apparatuses through data lines 37a of HDMI cables 37. Further, to and from the first and second HDMI terminals 23, 24 are inputted and outputted, through CEC lines 37b, data (respective commands and the like such as "Power On" command and "Power Off" command) for realizing various control functions (for example, power on/off control of the external apparatus by the digital broadcast receiving apparatus 11) in the digital broadcast receiving apparatus 11 and the external apparatus.

The STB 35 is connected to an unshown cable TV network to receive a program, or connected to an unshown telephone line to perform Internet connection. The STB 35 outputs the video signal to the digital broadcast receiving apparatus 11 through the HDMI cable 37.

The HD DVD player 36 performs reproduction of the video signal in accordance with an HD DVD (High Definition DVD) standard and outputs the reproduced video signal to the digital broadcast receiving apparatus 11 through the HDMI cable 37.

The digital broadcast receiving apparatus 11 can input therein video signals, sound signals and control signals in digital forms by the first and second HDMI terminals 23, 24. The external apparatus (for example, a disk recorder such as the HDD 41) is connected to the USB terminal 40 through a USB cable. The USB terminal 40 has a function as a connection part to which the HDD is connected.

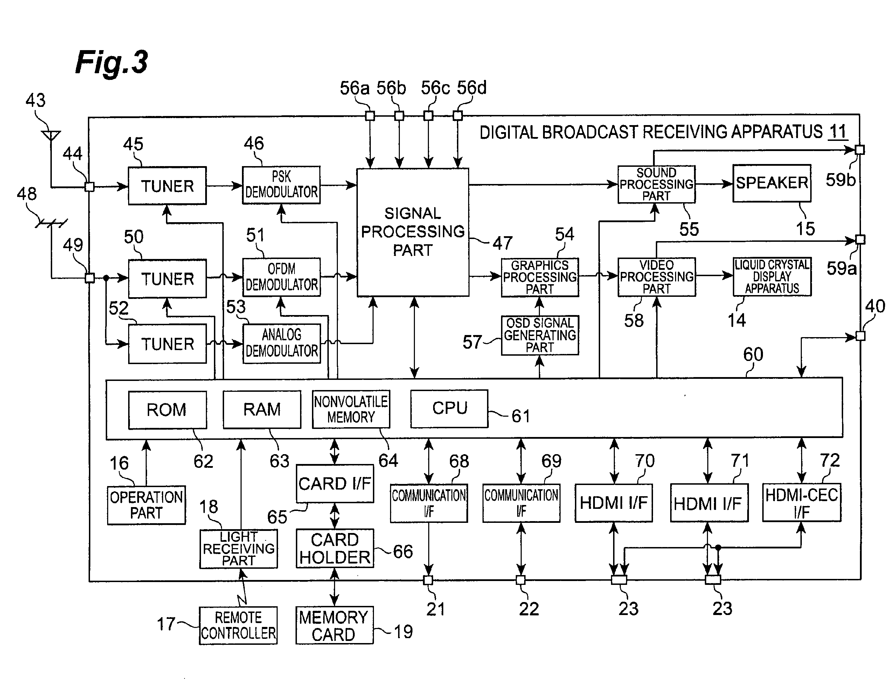

Next, a configuration of the inside of the digital broadcast receiving apparatus 11 will be described with reference to FIG. 3. FIG. 3 is a block diagram showing a main configuration of the inside of the digital broadcast receiving apparatus 11.

The digital broadcast receiving apparatus 11 includes input terminals 44, 49, tuners 45, 50, 52, and a PSK (Phase Shift Keying) demodulator 46. The digital broadcast receiving apparatus 11 also includes a signal processing part 47, an OFDM (Orthogonal Frequency Division Multiplexing) demodulator 51, an analog demodulator 53, a graphics processing part 54, a sound processing part 55, an OSD signal generating part 57 and a video processing part 58.

A satellite digital broadcast signal received by a BS/CS digital broadcast receiving antenna 43 is inputted to the input terminal 44. The satellite digital broadcast signal is supplied to the tuner 45 from the input terminal 44. The tuner 45 is a tuner for a satellite digital broadcast, and selects a broadcast signal of a desired channel from the satellite digital broadcast signals supplied thereto.

The broadcast signal which is selected by the tuner 45 is supplied to the PSK demodulator 46. The PSK demodulator 46 performs a demodulation processing of digital video signal and sound signal, and output the digital video signal and sound signal to the signal processing part 47.

A terrestrial digital broadcast signal received by a terrestrial broadcast receiving antenna 48 is inputted to the input terminal 49. The terrestrial digital broadcast signal is supplied to the tuner 50 from the input terminal 49. The tuner 50 is a tuner for a terrestrial digital broadcast, and selects a broadcast signal of a desired channel from the terrestrial digital broadcast signals supplied thereto.

The broadcast signal selected by the tuner 50 is supplied to the OFDM demodulator 51. The OFDM demodulator 51 performs a demodulation processing of digital video signal and sound signal, and outputs the digital video signal and sound signal to the signal processing part 47.

A terrestrial analogue broadcast signal received by the terrestrial broadcast receiving antenna 48 is also inputted to the input terminal 49. The terrestrial analogue broadcast signal is supplied to the tuner 52 from the input terminal 49. The tuner 52 is a tuner for a terrestrial analogue broadcast, and selects a broadcast signal of a desired channel from the terrestrial analogue broadcast signals supplied thereto.

The broadcast signal selected by the tuner 52 is supplied to the analogue demodulator 53. The analogue demodulator 53 performs a demodulation processing of analogue video signal and sound signal, and outputs the analogue video signal and sound signal to the signal processing part 47.

The signal processing part 47 selectively applies a predetermined digital signal processing to the digital video signal and sound signal supplied respectively from the PSK demodulator 46 and the OFDM demodulator 51, and outputs the digital video signal and sound signal to the graphics processing part 54 and the sound processing part 55.

A plurality (four in the case of the illustration) of input terminals 56a, 56b, 56c, 56d are connected to the signal processing part 47. These input terminals 56a to 56d are capable of inputting analogue video signals and sound signals therein from the DVD recorder 29 and the like as the external apparatuses.

This signal processing part 47 selectively digitizes the analogue video signals and sound signals supplied respectively from the analogue demodulator 53 and the respective input terminals 56a to 56d. The signal processing part 47 applies predetermined digital signal processings to the digitized video signals and sound signals, and thereafter, outputs the digitized video signals and sound signals to the graphics processing part 54 and the sound processing part 55.

The graphics processing part 54 superimposes an OSD (On Screen Display) signal generated in the OSD signal generating part 57 on the digital video signal supplied from the signal processing part 47, and outputs the signals. The graphics processing part 54 can selectively output the output video signal of the signal processing part 47 and the OSD signal outputted by the OSD signal generating part 57, and also can combine and output both the outputs so that both the outputs constitute halves of the screen respectively.

The digital video signal outputted from the graphics processing part 54 is supplied to the video processing part 58. The video processing part 58 converts the inputted digital video signal to an analogue video signal in a format displayable in the liquid crystal display apparatus 14, and thereafter, outputs the analog video signal to the liquid crystal display apparatus 14. The video processing part 58 also leads the analogue video signal to the outside through an output terminal 59a.

The sound processing part 55 converts the inputted digital sound signal to an analogue sound signal in a format reproducible in the speaker 15, and thereafter, outputs the analogue sound signal to the speaker 15. The sound processing part 55 also leads the analogue sound signal to the outside through an output terminal 59b.

The digital broadcast receiving apparatus 11 includes a control part 60, a card holder 66 and various kinds of interfaces (card I/F 65, communication I/F 68, communication I/F 69, first HDMI I/F 70, second HDMI I/F 71, HDMI-CEC I/F 72).

The control part 60 includes a CPU (Central Processing Unit) 61, a ROM (Read Only Memory) 62, a RAM (Random Access Memory) 63 and a nonvolatile memory 64. The control part 60 comprehensively controls the operations of the digital broadcast receiving apparatus 11 including an operation of receiving the broadcast signal. The control part 60 receives operation information from the operation part 16, or receives operation information sent out from the remote controller 17 through the light receiving part 18, and controls each part so that an operation content thereof is reflected.

While the CPU 61 operates as various kinds of units (initial connection judging unit, recording control unit, sector judging unit, disk judging unit, disk inspection unit, simple disk inspection judging unit, disk inspection switching unit, defective sector storage control unit, allocation unit, allocation control unit, display control unit) in accordance with a program stored in the ROM 62, the CPU 61 performs input and output of the signal from and to other components to perform operation control of the entire digital broadcast receiving apparatus 11.

The ROM 62 mainly stores a control program executed by the CPU 61. The RAM 63 provides a work area to the CPU 61. The nonvolatile memory 64 stores various kinds of setting information, control information and the like. In the embodiment, a later-described bad block table 93 is stored in the HDD 25, the HDD 27, and the HDD 41.

The control part 60 is connected to the card holder 66, to which the memory card 19 is loadable, through the card I/F (Interface) 65. Thereby, the control part 60 can perform information transmission to and from the memory card 19 loaded to the card holder 66 through the card I/F 65.

The control part 60 is also connected to the first LAN terminal 21 through the communication I/F 68. Thereby, the control part 60 can perform information transmission to and from the LAN compatible HDD 25 connected to the first LAN terminal 21, through the communication I/F 68. In this case, the control part 60 has a DHCP (Dynamic Host Configuration Protocol) server function, and assigns an IP (Internet Protocol) address to the LAN compatible HDD 25 connected to the LAN terminal 21 to perform control.

The control part 60 is connected to the second LAN terminal 22 through the communication I/F 69. Thereby, the control part 60 can perform information transmission to and from each apparatus connected to the second LAN terminal 22 such as the HDD 27, through the communication I/F 69.

The control part 60 is connected to the first HDMI terminal 23 through the first HDMI I/F 70 and the HDMI-CEC I/F 72, and connected to the second HDMI terminal 24 through the second HDMI I/F 71 and the HDMI-CEC I/F 72. Thereby, the control part 60 can perform information transmission to and from the STB 35 and the HD DVD player 36 which are connected to the first and second HDMI terminals 23, 24, through the first and second HDMI I/F 70, 71 and the HDMI-CEC I/F 72.

### (Description of Operation Content)

Next, an operation content of hard disk management performed by the digital broadcast receiving apparatus 11 with the above configuration will be described. In the embodiment, the hard disk management means an operation for enhancing a user's convenience at a time that the HDD is connected to the first LAN terminal 21, the second LAN terminal 22, and the USB terminal 40.

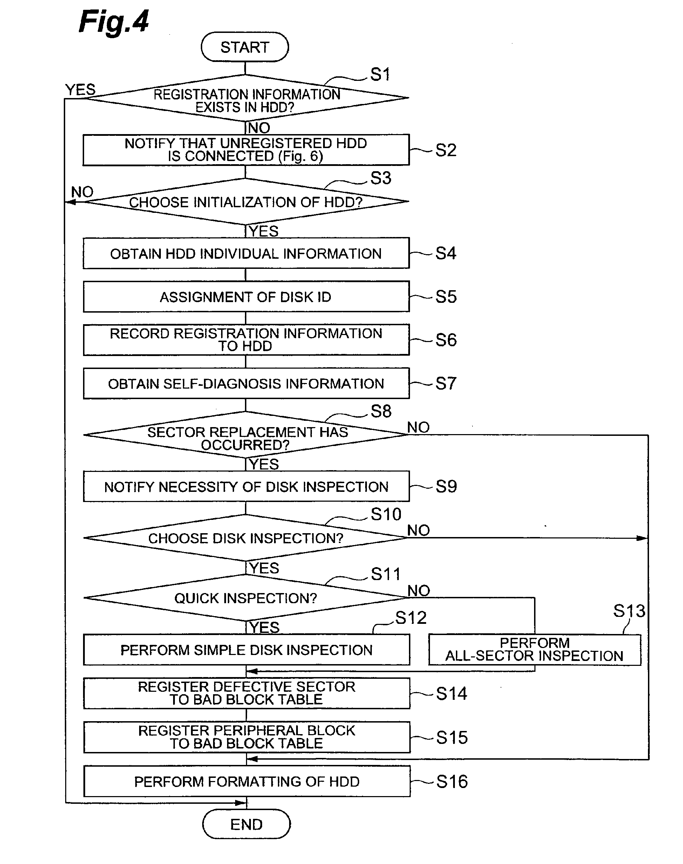

The digital broadcast receiving apparatus 11 performs the hard disk management along a flowchart shown in FIG. 4. In this case, the digital broadcast receiving apparatus 11 performs the hard disk management along the flowchart shown in FIG. 4 when the HDD is connected to the first LAN terminal 21, the second LAN terminal 22, and the USB terminal 40.

In this case, the CPU 61 controls the hard disk management along the flowchart shown in FIG. 4. Note that in the following description there is assumed a case that the HDD 41 (assumed to be an external HDD with a USB interface) is connected to the USB terminal 40.

When the CPU 61 detects that the HDD 41 is connected to the USB terminal 40, the CPU 61 starts the hard disk management to perform an operation as the initial connection judging unit and judges whether or not the HDD 41 is connected to the USB terminal 40 for the first time (S1). In this case, the CPU 61 accesses the HDD 41 to judge whether or not later-described registration information is recorded in the HDD 41.

If the CPU 61 judges that the registration information is not recorded in the HDD 41, the CPU 61 proceeds the operation to S2, and otherwise the CPU 61 terminates the hard disk management.

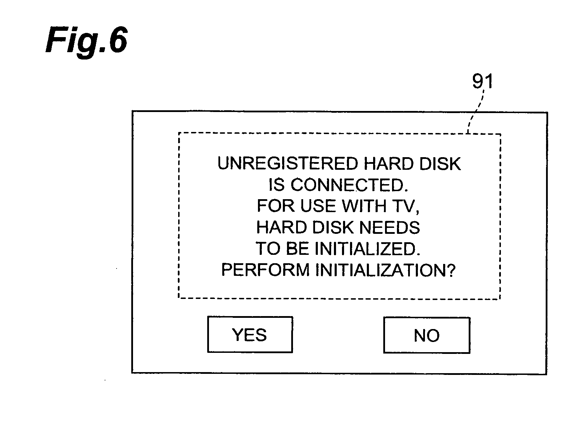

A case that the CPU 61 proceeds the operation to S2 corresponds to a case that the HDD 41 is connected to the USB terminal 40 for the first time. In this case, since the registration information is not recorded in the HDD 41, the CPU 61 performs an operation as the display control unit and makes the liquid crystal display apparatus 14 display an initial registration message 91 shown in FIG. 6.

The CPU 61 notifies the user that the HDD 41 is connected for the first time by making the initial registration message 91 displayed, while the CPU 61 makes the user chose whether or not to perform initialization (initialization of a hard disk provided in the HDD 41) of the HDD 41.

Since the HDD 41 is unregistered in the digital broadcast receiving apparatus 11 (that is, the HDD 41 has not been connected to the digital broadcast receiving apparatus 11 before), the initial registration message 91 has a content that can notify the user that the HDD 41 needs to be initialized (in the embodiment, "Unregistered hard disk is connected. For use with TV, hard disk needs to be initialized. Perform initialization?"), as shown in FIG. 6.

When the initial registration message 91 is being displayed, the user can select either one of "Yes" or "No" to choose whether or not to initialize the HDD 41.

Then, the user sees the initial registration message 91 displayed on the liquid crystal display apparatus 14 and performs a predetermined operation (also referred to as a remote control operation) and the like by using the remote controller 17 to choose whether or not to initialize the HDD 41.

Subsequently, the CPU 61 proceeds the operation to S3 and judges whether or not to perform initialization of the HDD41 based on the user's choice.

Here, if the user chooses the initialization of the HDD 41 (for example, the user puts a cursor on "Yes" in FIG. 6 and presses an "enter key"), the CPU 61 judges to perform the initialization of the HDD 41 and proceeds the operation to S4. If the user does not choose the initialization of the HDD 41, the CPU 61 terminates the hard disk management.

Further, after sequentially performing S4, S5, and S6, the CPU 61 performs an operation as the recording control unit and writes the registration information to HDD 41 (makes the HDD 41 record the registration information).

In this case, after the CPU 61 performs S4 in order to generate registration information to be written, the CPU 61 obtains from the HDD 41 hard disk individual information (for example, a serial number) peculiar to that HDD 41.

Next, the CPU 61 proceeds the operation to S5 and assigns a disk ID (S5). The disk ID is used for identifying and managing each HDD to be connected, in the digital broadcast receiving apparatus 11.

Further, the CPU 61 generates registration information by using the hard disk individual information obtained in S4 and the disk ID assigned in S5, and makes the HDD 41 record the generated registration information (S6). The registration information generated thereby indicates a correspondence between the digital broadcast receiving apparatus 11 itself (apparatus itself) and the HDD 41. Note that the registration information may include other information than the hard disk individual information and the disk ID, and it is preferable to make the HDD 41 record the information after coding in order to prevent the content from being known easily.

Next, the CPU 61 proceeds the operation to S7 to obtain from the HDD 41 self-diagnosis information of the HDD 41 (S7). Subsequently, the CPU 61 performs an operation as the sector judging unit and judges whether or not sector replacement has occurred in the hard disk (whether or not a substitute sector to replace a later-described defective sector is prepared) based on the obtained self-diagnosis information (S8). The self-diagnosis information means various kinds of diagnostic data obtained by performing a self-diagnosis function referred to as SMART (Self-Monitoring Analysis and Reporting Technology), for example.

Here, if the CPU 61 judges that the sector replacement has occurred, the CPU 61 proceeds the operation to S9, and otherwise proceeds the operation to S16.

When the CPU 61 proceeds the operation to S9, the CPU 61 performs an operation as the display control unit and makes the liquid crystal display apparatus 14 display a disk inspection message 92 (S9).

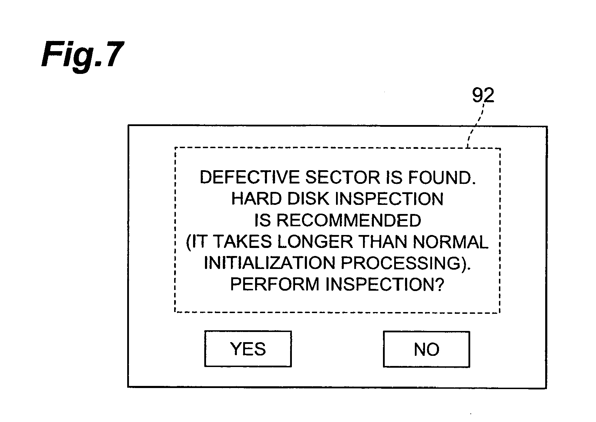

The disk inspection message 92 is a message for notifying the user of necessity of the disk inspection on the HDD 41 to recommend the user to perform the disk inspection, as shown in FIG. 7.

The CPU 61 notifies the user of necessity of the disk inspection by making the disk inspection message 92 displayed, while the CPU makes the user choose whether or not to perform the disk inspection.

The disk inspection messages 92 has a content shown in FIG. 7. That is, the disk inspection message 92 in FIG. 7 tells "Defective sector is found. Hard disk inspection is recommended (it takes longer than normal initialization processing). Perform inspection?". Note that in the embodiment the disk inspection means an inspection for finding a defective sector for the hard disk of the HDD 41. The defective sector means a sector which cannot read or write data due to a physical damage such as a collision of a head in the hard disk.

When the disk inspection message 92 is displayed, the user can select either one of "Yes" or "No" to choose whether or not to perform the disk inspection.

The user sees the disk inspection message 92 displayed on the liquid crystal display apparatus 14 and performs a remote control operation and the like to choose whether or not to perform the disk inspection on the HDD 41.

Then, the CPU 61 proceeds the operation to S10 to judge whether or not to perform the disk inspection based on the choice of the user. In this case, the CPU 61 performs an operation as the disk judging unit.

Here, if the user chooses to perform the disk inspection (for example, the user puts a cursor on "Yes" in FIG. 7 and presses an "enter key"), the CPU 61 proceeds the operation to S11. If the user does not choose to perform the disk inspection, the CPU 61 proceeds the operation to S16.

The CPU 61 also performs an operation as the simple disk inspection judging unit in S11 and judges whether or not to perform a quick inspection based on a predetermined condition. The CPU 61 switches a content of the disk inspection to be performed to a simple disk inspection or an all-sector inspection, which will be described later, in correspondence with a judgment result. In other words, when the CPU 61 judges to perform the quick inspection, the CPU 61 performs S12 and proceeds the operation to S14. When judging not to perform the quick inspection, the CPU 61 performs S13 and proceeds the operation to S14. In this case, the CPU 61 performs an operation as the disk inspection switching unit.

When the CPU 61 proceeds to S12, the CPU 61 performs a disk inspection (this disk inspection corresponds to the simple disk inspection) only for a sector (management sector) to which management data (metadata) of a file system is to be written among all the sectors existing in the hard disk of HDD 41.

In S13, the CPU 61 also performs a disk inspection (this disk inspection corresponds to the all-sector inspection) for all the sectors existing in the hard disk of the HDD 41. In both S12 and S13, the CPU 61 performs an operation as the disk inspection unit.

Further, when the CPU 61 proceeds to S14, the CPU 61 performs an operation as the defective sector storage control unit and registers a defective sector found in the disk inspection of S12 or S13 to the bad block table 93 by the block. Subsequently, the CPU 61 performs S15 to also register peripheral sectors of the defective sector to the bad block table 93 by the block.

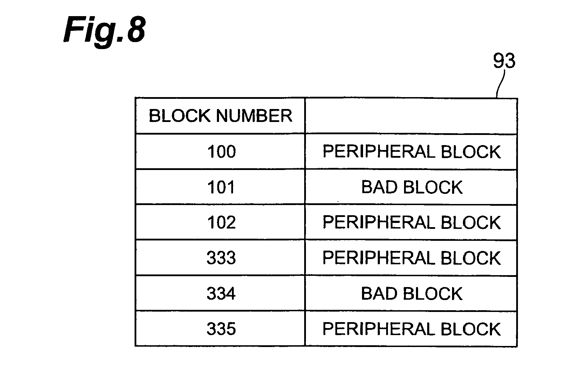

The bad block table 93 is a defective sector storage device, and as shown in FIG. 8, there are recorded not only a block number of a block (bad block) including the defective sector but also a block number of a block (peripheral block) including the peripheral sector.

This is because of the following reason. That is, the defective sector is a sector which cannot read or write data due to a physical damage such as collision of the head. Therefore, it is considered that if the bad block is found in the disk inspection, there is a possibility that the periphery of that bad block becomes a bad block in the near future. Note that in the digital broadcast receiving apparatus 11 in the embodiment, eight sectors make one block.

Further, in the embodiment, the peripheral blocks are ten blocks before and after the bad block and a block parameter for specifying the peripheral blocks is set to be "10". However, the block parameter can be set to another number than "10". Note that the sector of the block registered to the bad block table 93 is to be excluded from an object of the allocation, as will be described later.

When the CPU 61 proceeds to S16, the CPU 61 performs an operation as an initializing unit and performs initialization, that is, formatting the HDD 41 for recording in the digital broadcast receiving apparatus 11.

After the digital broadcast receiving apparatus 11 performs S16, the digital broadcast receiving apparatus 11 terminates the hard disk management. Note that when the registration information cannot be recorded other than to the logical format, the registration information is deleted in formatting of the HDD, and it is necessary to record the registration information after performing formatting.

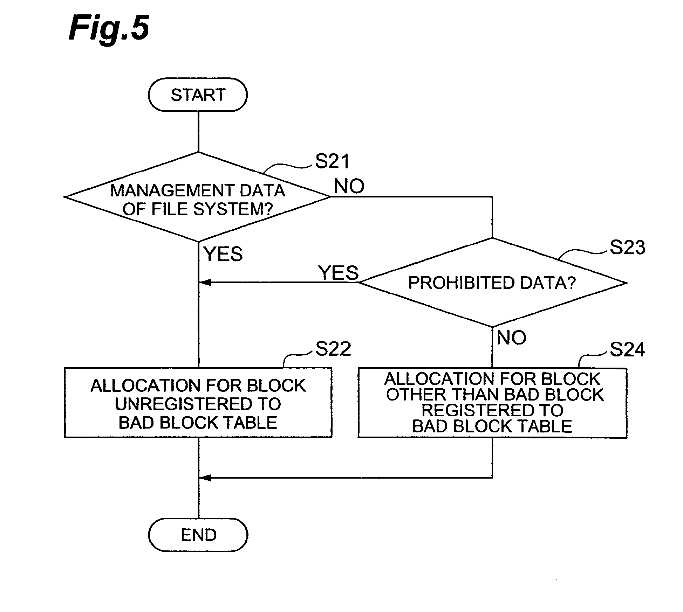

On the other hand, if the CPU 61 secures a block for recording data (if the CPU 61 performs an allocation) according to a file system in correspondence with a recording request of video data and so on, the CPU 61 performs an allocation operation along a flowchart shown in FIG. 5.

FIG. 5 is a flowchart showing a procedure of the allocation operation in the digital broadcast receiving apparatus 11.

When the CPU 61 performs initialization of a hard disk, recording of a program or the like, live data such as management data (metadata) of the file system or video data is recorded to the hard disk of the HDD 41. It is the CPU 61 to determine in accordance with the file system where in the hard disk (in which block) to record the live data such as the metadata or the video data.

As stated above, in the digital broadcast receiving apparatus 11, when the defective sector is found in the disk inspection, the CPU 61 registers the defective sector to the bad block table 93 by the block. Thus, the CPU 61 can perform the allocation with avoiding the block registered to the bad block table 93, that is, avoiding the defective sector.

Accordingly, the CPU 61 can perform the allocation for the sector other than the defective sector and can assign the sector other than the defective sector to a data storage area. In this case, the CPU 61 operates as the allocation unit and the allocation control unit.

When the CPU 61 performs the allocation operation, the CPU 61 judges whether or not to perform the allocation of the management data (metadata) of the file system (S21). Here, if the CPU 61 performs the allocation of the management data (metadata) of the file system, the CPU 61 proceeds the operation to S22, and otherwise the CPU 61 proceeds the operation to S23.

In S22, the CPU 61 excludes all the blocks (that is, the bad block and the peripheral blocks) registered to the bad block table 93 from the object and performs the allocation for only the block which is not registered to the bad block table 93. In other words, the CPU 61 excludes both the bad block and the peripheral blocks from the object of the allocation in S22. After performing S22, the CPU 61 terminates the allocation operation.

In S23, the CPU 61 judges whether or not the data to be allocated (objective data) is data (prohibited data) prohibited from the allocation for the peripheral sector (S23). If the objective data is the prohibited data, the CPU 61 proceeds the operation to S22, and otherwise, the CPU 61 proceeds the operation to S24.

In S24, the CPU 61 performs the allocation for the block other than the bad block registered to the bad block table 93, and after performing S24, the CPU 61 terminates the allocation operation. If the CPU 61 performs S24, it means that the CPU 61 performs the allocation for the peripheral block.

As stated above, when the HDD is connected to the digital broadcast receiving apparatus 11 for the first time, the digital broadcast receiving apparatus 11 records the registration information to the HDD (S6) Accordingly, the digital broadcast receiving apparatus 11 can detect whether or not the HDD is connected for the first time by performing the initial connection judgment for checking whether or not the register information exists in the connected HDD.

Thus, when the HDD is connected for the first time, the digital broadcast receiving apparatus 11 can notify the user of the fact. Therefore, when the user connects the HDD to the digital broadcast receiving apparatus 11 for the first time, the user can know the fact by the digital broadcast receiving apparatus 11. Accordingly, it becomes possible to prevent a trouble such as initializing the HDD by mistake.

Note that though the digital broadcast receiving apparatus 11 notifies the user that the HDD is connected for the first time by displaying the initial registration message 91, the digital broadcast receiving apparatus 11 may notify the user that the HDD is connected for the first time, by another unit.

Further, since the digital broadcast receiving apparatus 11 judges whether or not the sector replacement has occurred based on the self-diagnosis information of the hard disk (S8), the digital broadcast receiving apparatus 11 can notify the user of the fact by displaying the disk inspection message 92 and so on when the sector replacement has occurred.

Further, the digital broadcast receiving apparatus 11 can also recommend the user to perform the disk inspection by displaying the disk inspection message 92.

For example, in a case that the HDD 41 is new and so on, if the sector replacement has not occurred, it is not necessary to perform the disk inspection. However, in a case of a used HDD such as an HDD used as an auxiliary storage apparatus for a personal computer, the sector replacement may have occurred. If video data is recorded to the HDD in which the sector replacement has occurred, there is a possibility that a problem such as a recording defect occurs.

Therefore, the digital broadcast receiving apparatus 11 judges whether or not the sector replacement has occurred, and performs the disk inspection when the sector replacement has occurred. Thereby, it is possible to reduce the problem such as recording defect due to the sector replacement.

Further, since the user can choose whether or not to perform the disk inspection on that occasion, it is possible not to perform the disk inspection if the user judges that the disk inspection is unnecessary and so on.

As stated above, as a result that the digital broadcast receiving apparatus 11 performs the hard disk management, the user's convenience in the case that the HDD is connected is enhanced.

If the disk inspection is tried to be performed for all the sectors existing in the HDD, it takes time until the disk inspection is completed. Then, a recording cannot be performed, and the user's convenience may be reduced if the user desires to perform the recording soon.

Thus, in the digital broadcast receiving apparatus 11, the simple disk inspection and the all-sector inspection can be easily switched. Thereby, it is possible to perform the disk inspection only for a specific sector such as a sector to which the management data (metadata) of the file system is written, for example, so that a requisite minimum disk inspection can be performed.

Thereby, the disk inspection can be completed in a short period of time, so that the user's convenience in a case of trying to perform the recording soon and the like is enhanced.

When the simple disk inspection is performed, problems about all the data to be recorded are not reduced, but the problem about the management data (metadata) of the file system can be certainly reduced. Therefore, even if the simple disk inspection is performed, a serious failure in which the HDD is not able to be mounted and so on can be certainly avoided.

Further, since the digital broadcast receiving apparatus 11 records the defective sector found in the disk inspection to the bad block table 93, the digital broadcast receiving apparatus 11 can perform the allocation with avoiding the defective sector.

There might be a possibility that the peripheral sector of the defective sector becomes a defective sector in the near future. Therefore, it is desirable to register not only the bad block found in the disk inspection but also the peripheral block to the bad block table 93, as in the digital broadcast receiving apparatus 11.

Thereby, the digital broadcast receiving apparatus 11 can record video data with avoiding the sector which may become a defective sector in the near future and can also avoid a trouble which may occur in the near future.

However, if the allocation for the defective sector and the peripheral sector is uniformly prohibited, recordable capacity of the HDD is decreased. Thus, the digital broadcast receiving apparatus 11 judges whether or not to perform the allocation of the management data of the file system, and, based on a judgment result, switches the sectors to be excluded from the object.

In this case, when performing the allocation of the management data of the file system, the digital broadcast receiving apparatus 11 excludes the defective sector and the peripheral sector from the object of the allocation (S22). However, when performing the allocation of data other than the management data of the file system, only the defective sector is excluded from the object of the allocation.

Thereby, the digital broadcast receiving apparatus 11 can reduce a probability of destruction of the important data such as metadata.

Note that as for the live data other than the management data of the file system, it may be made possible that the allocation for the peripheral block is prohibited. Thereby, safety of the data can be further enhanced.

In the above embodiment, there is described an example of a case that the digital broadcast receiving apparatus 11 to which the disk recorder management apparatus is applied, but the disk recorder management apparatus can be also applied to an apparatus capable of recording or reproducing video data, such as a DVD player or a DVD recorder.

There is also described an example of a case that the HDD is connected as the disk recorder to the digital broadcast receiving apparatus 11, but the invention can be also applied to a case that a disk recorder employing an optical disk such as a DVD-R or a DVD-RAM is connected.

The description in the above is to describe the embodiments of the invention and, in no case, limits the apparatus and method of the invention, so that various modifications can be embodied with ease. Further, the device and method structured by appropriately combining the components, the functions, the features or the steps of the method in the respective embodiments are also within the scope of the invention.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A disk recorder management apparatus (11), comprising:
a connection part (40) to which a disk recorder (41) is connected;
an initial connection judging unit (61) judging whether or not the disk recorder is connected to said connection part for the first time; and
a recording control unit (61) making the disk recorder record registration information indicating a correspondence between the disk recorder management apparatus (11) and the disk recorder when it is judged by said initial connection judging unit that the disk recorder is connected for the first time.

2. A disk recorder management apparatus according to claim 1, further comprising:
a sector judging unit (61) judging whether or not sector replacement exists in a disk of the disk recorder connected to said connection part;
a disk judging unit (61) judging whether or not to perform a disk inspection to find a defective sector for the disk of the disk recorder when it is judged by said sector judging unit that the sector replacement exists; and
a disk inspection unit (61) performing the disk inspection when it is judged by said disk judging unit to perform the disk inspection.

3. A disk recorder management apparatus according to claim 2, further comprising:
a simple disk inspection judging unit (61) judging whether or not to perform a simple disk inspection for only a specific sector among all the sectors existing in the disk of the disk recorder; and
a disk inspection switching unit (61) switching the disk inspection performed by said disk inspection unit to either one of the simple disk inspection or an all-sector inspection for all the sectors, in correspondence with a judgment result of said simple disk inspection judging unit.

4. A disk recorder management apparatus according to claim 2 or claim 3, further comprising:
a defective sector storage device (93) storing defective sector information indicating the defective sector; and
a defective sector storage control unit (61) making said defective sector storage device store the defective sector information indicating the defective sector found by the disk inspection.

5. A disk recorder management apparatus according to claim 4,
wherein said defective sector storage control unit makes said defective sector storage device store peripheral sector information indicating a peripheral sector existing in a periphery of the defective sector along with the defective sector information.

6. A disk recorder management apparatus according to claim 4 or claim 5, further comprising:
an allocation unit (61) performing an allocation assigning any sector existing in the disk of the disk recorder to a data storage area; and
an allocation control unit (61) controlling so that said allocation unit performs the allocation for a sector other than the defective sector corresponding to the defective sector information stored in said defective sector storage device.

7. A disk recorder management apparatus according to claim 6,
wherein said allocation control unit controls so that said allocation unit performs the allocation for the sector other than the defective sector and the peripheral sector corresponding to the peripheral sector information when said allocation unit performs the allocation of management data of a file system.

8. A disk recorder management apparatus according to any one of claim 2 to claim 7, further comprising
a display control unit making a disk inspection message (92) for recommendation of performing the disk inspection display when it is judged by said sector judging unit that the sector replacement exists.

9. A disk recorder management method in a disk recorder management apparatus comprising a connection part to which a disk recorder is connected, the disk recorder management method comprising
making the disk recorder record registration information indicating a correspondence between the disk recorder management apparatus and the disk recorder when the disk recorder is connected to the connection part for the first time.
